# EUROPEAN PATENT APPLICATION

(11) **EP 4 654 645 A1**
(43) Date of publication of application: **26.11.2025**
(21) Application number: 24749514.6
(22) Date of filing: 12.01.2024
(51) Int. Cl.: H04W 16/28

(54) **BEAM TURN-OFF METHOD AND COMMUNICATION APPARATUS**

(30) Priority: 31.01.2023 CN 202310094338
(71) Applicant: Huawei Technologies Co., Ltd., Shenzhen, Guangdong 518129 (CN)
(72) Inventor: LIU, Tao, Shenzhen, Guangdong 518129 (CN)
(74) Representative: Isarpatent
(86) International application number: PCT/CN2024/071912
(87) International publication number: WO 2024/160032

(57) **Abstract**

This application discloses a beam disabling method and a communication apparatus. The method includes: A first network device receives first indication information from a second network device, where the first indication information indicates a load of a second beam and/or a number of terminal devices in the second beam, and the second beam is one or more beams of the second network device. If a first beam of the first network device meets a first condition and the second beam meets a second condition, the first network device disables the first beam, where the first beam and the second beam are not in a same frequency band, and a coverage of the first beam is less than or equal to a coverage of the second beam. The method helps reduce energy consumption of the first network device.

## Description

This application claims priority to Chinese Patent Application No. 202310094338.7, filed with the China National Intellectual Property Administration on January 31, 2023 and entitled "BEAM DISABLING METHOD AND COMMUNICATION APPARATUS", which is incorporated herein by reference in its entirety.

### TECHNICAL FIELD

This application relates to the field of communication technologies, and in particular, to a beam disabling method and a communication apparatus.

### BACKGROUND

A synchronization signal and PBCH block (synchronization signal and PBCH block, SSB) beam may also be referred to as a broadcast beam, and is a cell-level beam. A network device periodically transmits an SSB beam, to broadcast a synchronization message and a system message. However, when the network device continuously transmits the SSB beam in a no-load or low-load scenario, energy consumption of the network device increases. The no-load or low-load scenario is a scenario in which a number of terminal devices connected to the network device is small or a network load is low. How to reduce energy consumption of the network device is an urgent problem to be resolved.

### SUMMARY

Embodiments of this application provide a beam disabling method and a communication apparatus, to help reduce energy consumption of a network device.

According to a first aspect, this application provides a beam disabling method. The method includes: A first network device receives first indication information from a second network device, where the first indication information indicates a load of a second beam and/or a number of terminal devices in the second beam, and the second beam is one or more beams of the second network device. If a first beam of the first network device meets a first condition and the second beam meets a second condition, the first network device disables the first beam, where the first beam and the second beam are not in a same frequency band, and a coverage of the first beam is less than or equal to a coverage of the second beam. Optionally, the first condition is one or more of the following conditions: A load of the first beam is less than a first threshold; and a number of terminal devices in the first beam is less than a second threshold. The second condition is one or more of the following conditions: A sum of the load of the first beam and a load of the second beam is less than a third threshold; a sum of the number of terminal devices in the first beam and the number of terminal devices in the second beam is less than a fourth threshold; the load of the second beam is less than a fifth threshold; and the number of terminal devices in the second beam is less than a sixth threshold.

Based on the method described in the first aspect, when the first beam meets the first condition, it indicates that a current load of the first beam is low. If the first network device still continuously transmits a beam when the load of the first beam is low, large energy consumption is caused. When the second beam meets the second condition, it indicates that a current load of the second beam is low, and a load caused by handing over a terminal device from the first beam to the second beam after the first beam is disabled can be borne. Therefore, disabling the first beam when the first beam meets the first condition and the second beam meets the second condition helps reduce energy consumption of the first network device while avoiding impact on communication of the terminal device.

In a possible implementation, before the first network device disables the first beam, the method further includes: The first network device sends cell handover information to a terminal device in the first beam, where the cell handover information indicates to hand over the terminal device to a first cell served by the second network device. Based on this implementation, the terminal device initiates cell handover in a timely manner before the first beam is disabled. This helps avoid impact on communication of the terminal device.

In a possible implementation, a specific implementation in which the first network device disables the first beam is as follows: If all terminal devices in the first beam complete cell handover, the first network device disables the first beam. If the first network device disables the first beam when a terminal device in the first beam does not complete cell handover, communication of the terminal device is affected. A possible reason why the terminal device fails to complete cell handover is that the second network device currently cannot carry more terminal devices. When the terminal device fails to complete cell handover, the first network device does not disable the first beam, but re-determines, based on new indication information, whether the first beam needs to be disabled. After all terminal devices complete cell handover, the first network device disables the first beam. This implementation helps avoid impact on communication of the terminal device.

In a possible implementation, after the first network device disables the first beam, the method further includes: The first network device receives second indication information from the second network device, where the second indication information indicates the load of the second beam and/or the number of terminal devices in the second beam. If the second beam meets a third condition, the first network device enables the first beam, where the third condition is one or more of the following conditions: A total load of the second beam of the second network device is greater than or equal to a seventh threshold; and a total number of terminal devices in the second beam of the second network device is greater than or equal to an eighth threshold. When the second beam meets the third condition, it indicates that a current total load of the second beam is high. In this case, the first network device enables the first beam, and the second network device sends the cell handover information to the terminal device, so that the terminal device is handed over to the first beam. This helps avoid impact on communication of the terminal device.

In a possible implementation, after the first network device disables the first beam, the method further includes: The first network device receives second indication information from the second network device, where the second indication information indicates the load of the second beam and/or the number of terminal devices in the second beam. If the second beam meets a fourth condition, the first network device enables a first beam corresponding to the second beam, where the first beam corresponding to the second beam is a beam in which the terminal device is located before the terminal device is handed over to the first cell, and the fourth condition is one or more of the following conditions: The load of the second beam is greater than or equal to a ninth threshold; and the number of terminal devices in the second beam is greater than or equal to a tenth threshold. When the second beam meets the fourth condition, it indicates that a current load of the second beam is high. In this case, the first network device enables the first beam, and the second network device sends the cell handover information to the terminal device, so that the terminal device is handed over to the first beam corresponding to the second beam. This helps avoid impact on communication of the terminal device. In addition, because the beam in which the terminal device is located before cell handover is enabled, this is more targeted, and helps improve user experience for the terminal device.

In a possible implementation, the method further includes: The first network device receives beam enabling information from the second network device, where the beam enabling information indicates to enable the first beam. The first network device enables the first beam. Based on this implementation, the second network device may determine whether the first beam needs to be enabled currently, and the first network device does not need to perform determining, which helps reduce a load of the first network device. In addition, the second network device does not need to send second indication information to the first network device, which reduces a network load.

According to a second aspect, this application provides a beam disabling method. The method includes: A first network device sends third indication information to a second network device, where the third indication information indicates a load of a first beam and/or a number of terminal devices in the first beam, and the first beam is a beam of the first network device. The first network device receives beam disabling information from the second network device, where the beam disabling information indicates to disable the first beam. The first network device disables the first beam.

Based on the method described in the second aspect, the first network device disables the first beam under an indication of the second network device, to help reduce energy consumption of the first network device.

In a possible implementation, before the first network device disables the first beam, the method further includes: The first network device sends cell handover information to a terminal device in the first beam, where the cell handover information indicates to hand over the terminal device to a first cell served by the second network device. Based on this implementation, the terminal device initiates cell handover in a timely manner before the first beam is disabled. This helps avoid impact on communication of the terminal device.

In a possible implementation, a specific implementation in which the first network device disables the first beam is as follows: If all terminal devices in the first beam complete cell handover, the first network device disables the first beam. Based on this implementation, when a terminal device in the first beam does not complete cell handover, the first network device disables the first beam. This affects communication of the terminal device. A possible reason why the terminal device fails to complete cell handover is that the second network device currently cannot carry more terminal devices. When the terminal device fails to complete cell handover, the first network device does not disable the first beam, but re-determines, based on new indication information, whether the first beam needs to be disabled. After all terminal devices complete cell handover, the first network device disables the first beam. This implementation helps avoid impact on communication of the terminal device.

In a possible implementation, after the first network device disables the first beam, the method further includes: The first network device receives second indication information from the second network device, where the second indication information indicates a load of a second beam of the second network device and/or a number of terminal devices in the second beam, the first beam and the second beam are not in a same frequency band, and a coverage of the first beam is less than or equal to a coverage of the second beam. If the second beam meets a third condition, the first network device enables the first beam, where the third condition is one or more of the following conditions: A total load of the second beam of the second network device is greater than or equal to a seventh threshold; and a total number of terminal devices in the second beam of the second network device is greater than or equal to an eighth threshold. Based on this implementation, when the second beam meets the third condition, it indicates that a current total load of the second beam is high. In this case, the first network device enables the first beam, and the second network device sends cell handover information to the terminal device, so that the terminal device is handed over to the first beam. This helps avoid impact on communication of the terminal device.

In a possible implementation, after the first network device disables the first beam, the method further includes: The first network device receives second indication information from the second network device, where the second indication information indicates a load of a second beam of the second network device and/or a number of terminal devices in the second beam, the first beam and the second beam are not in a same frequency band, and a coverage of the first beam is less than a coverage of the second beam. If the second beam meets a fourth condition, the first network device enables a first beam corresponding to the second beam, where the first beam corresponding to the second beam is a beam in which the terminal device is located before the terminal device is handed over to the first cell, and the fourth condition is one or more of the following conditions: The load of the second beam is greater than or equal to a ninth threshold; and the number of terminal devices in the second beam is greater than or equal to a tenth threshold. Based on this implementation, when the second beam meets the fourth condition, it indicates that a current load of the second beam is high. In this case, the first network device enables the first beam, and the second network device sends the cell handover information to the terminal device, so that the terminal device is handed over to the first beam corresponding to the second beam. This helps avoid impact on communication of the terminal device. In addition, because the beam in which the terminal device is located before cell handover is enabled, this is more targeted, and helps improve user experience for the terminal device.

In a possible implementation, after the first network device disables the first beam, the method further includes: The first network device receives beam enabling information from the second network device, where the beam enabling information indicates to enable the first beam. The first network device enables the first beam. Based on this implementation, the second network device may determine whether the first beam needs to be enabled currently, and the first network device does not need to perform determining, which helps reduce a load of the first network device. In addition, the second network device does not need to send second indication information to the first network device, which reduces a network load.

According to a third aspect, this application provides a beam disabling method. The method includes: A second network device receives third indication information from a first network device, where the third indication information indicates a load of a first beam of the first network device and/or a number of terminal devices in the first beam. If a first beam in the first beam meets a first condition and a second beam of the second network device meets a second condition, the second network device sends beam disabling information to the first network device, where the beam disabling information indicates the first network device to disable the first beam, the first beam and the second beam are not in a same frequency band, and a coverage of the first beam is less than or equal to a coverage of the second beam. Optionally, the first condition is one or more of the following conditions: The load of the first beam is less than a first threshold; and the number of terminal devices in the first beam is less than a second threshold. The second condition is one or more of the following conditions: A sum of the load of the first beam and a load of the second beam is less than a third threshold; a sum of the number of terminal devices in the first beam and a number of terminal devices in the second beam is less than a fourth threshold; the load of the second beam is less than a fifth threshold; and the number of terminal devices in the second beam is less than a sixth threshold.

Based on the method described in the third aspect, when the first beam meets the first condition, it indicates that a current load of the first beam is low. If the first network device still continuously transmits a beam when the load of the first beam is low, large energy consumption is caused. When the second beam meets the second condition, it indicates that a current load of the second beam is low, and a load caused by handing over a terminal device from the first beam to the second beam after the first beam is disabled can be borne. Therefore, disabling the first beam when the first beam meets the first condition and the second beam meets the second condition helps reduce energy consumption of the first network device while avoiding impact on communication of the terminal device.

In a possible implementation, after the second network device sends the beam disabling information to the first network device, the method further includes: If the second beam meets a third condition, the second network device sends beam enabling information to the first network device, where the beam enabling information indicates to enable the first beam, and the third condition is one or more of the following conditions: A total load of the second beam of the second network device is greater than or equal to a seventh threshold; and a total number of terminal devices in the second beam of the second network device is greater than or equal to an eighth threshold. When the second beam meets the third condition, it indicates that a current total load of the second beam is high. In this case, the first network device enables the first beam, and the second network device sends cell handover information to the terminal device, so that the terminal device is handed over to the first beam. This helps avoid impact on communication of the terminal device.

In a possible implementation, after the second network device sends the beam disabling information to the first network device, the method further includes: If the second beam meets a fourth condition, the second network device sends beam enabling information to the first network device, where the beam enabling information indicates the first network device to enable a first beam corresponding to the second beam, and the first beam corresponding to the second beam is a beam in which a terminal device is located before cell handover. The second network device sends cell handover information to a terminal device in the second beam, where the cell handover information indicates to hand over the terminal device to a cell in the first beam corresponding to the second beam. When the second beam meets the third condition, it indicates that a current total load of the second beam is high. In this case, the first network device enables the first beam, and the second network device sends cell handover information to the terminal device, so that the terminal device is handed over to the first beam. This helps avoid impact on communication of the terminal device.

In a possible implementation, after the second network device sends the beam disabling information to the first network device, the method further includes: sending second indication information to the first network device, where the second indication information indicates the load of the second beam and/or the number of terminal devices in the second beam.

According to a fourth aspect, this application provides a communication apparatus. The communication apparatus may alternatively be a chip system. The communication apparatus may perform the method in the first aspect or the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the method in the first aspect or the second aspect, and the beneficial effect thereof. Repeated content is not described again.

According to a fifth aspect, this application provides a communication apparatus. The communication apparatus may alternatively be a chip system. The communication apparatus may perform the method in the third aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect thereof, refer to the method in the third aspect, and the beneficial effect thereof. Repeated content is not described again.

According to a sixth aspect, this application provides a communication apparatus. The communication apparatus includes a processor. When the processor invokes a computer program in a memory, the method according to any one of the first aspect to the third aspect and the possible implementations of the method are performed.

In a possible implementation, the communication apparatus further includes the memory, and the memory and the processor are coupled to each other. Optionally, the memory and the processor are integrated together.

In a possible implementation, the communication apparatus further includes a transceiver, and the transceiver is configured to: send and receive data and/or signaling.

According to a seventh aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the third aspect and the possible implementations of the method by using a logic circuit or by executing code instructions.

According to an eighth aspect, this application provides a computer-readable storage medium. The storage medium stores a computer program or instructions. When the computer program or the instructions are executed by a communication apparatus, the method according to any one of the first aspect to the third aspect and the possible implementations of the method are implemented.

According to a ninth aspect, an embodiment of this application provides a computer program or a computer program product, including code or instructions. When the code or the instructions are run on a computer, the computer is enabled to perform the method according to any one of the first aspect to the third aspect and the possible implementations thereof.

### BRIEF DESCRIPTION OF DRAWINGS

FIG. 1 is a diagram of a communication system according to an embodiment of this application;
FIG. 2 is a diagram of a radio access network according to an embodiment of this application;
FIG. 3 is a diagram of an architecture of a communication network according to this application;
FIG. 4 is a diagram of one type of beam transmission according to an embodiment of this application;
FIG. 5 is a diagram of another type of beam transmission according to an embodiment of this application;
FIG. 6 is a diagram of distribution of beam transmission slots according to an embodiment of this application;
FIG. 7 is a schematic flowchart of a beam disabling method according to an embodiment of this application;
FIG. 8 is a schematic flowchart of another beam disabling method according to an embodiment of this application;
FIG. 9 is a schematic flowchart of another beam disabling method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of a chip according to an embodiment of this application.

### DESCRIPTION OF EMBODIMENTS

The terms "first", "second", and the like in the specification, claims, and accompanying drawings of this application are intended to distinguish between different objects, but are not intended to describe a specific sequence. In addition, the terms "including" and "having" and any other variants thereof are intended to cover a non-exclusive inclusion. For example, a process, a method, a system, a product, or a device that includes a series of steps or units is not limited to the enumerated steps or units, but optionally further includes an unenumerated step or unit, or optionally further includes another inherent step or unit of the process, the method, the product, or the device.

"Embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, "a and b", "a and c", "b and c", or "a, b, and c", where a, b, and c may be singular or plural.

The following describes a system architecture in embodiments of this application.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application may be applied to various communication systems such as a satellite communication system and a conventional mobile communication system. The satellite communication system may be integrated with the conventional mobile communication system (namely, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or new radio (new radio, NR), a 6th generation (6th generation, 6G) system, or another future communication system. The communication system further supports a communication system integrating a plurality of wireless technologies, for example, may be further used in a system that integrates a non-terrestrial network (non-terrestrial network, NTN) and a terrestrial mobile communication network, for example, an unmanned aerial vehicle, a satellite communication system, or high altitude platform (high altitude platform station, HAPS) communication.

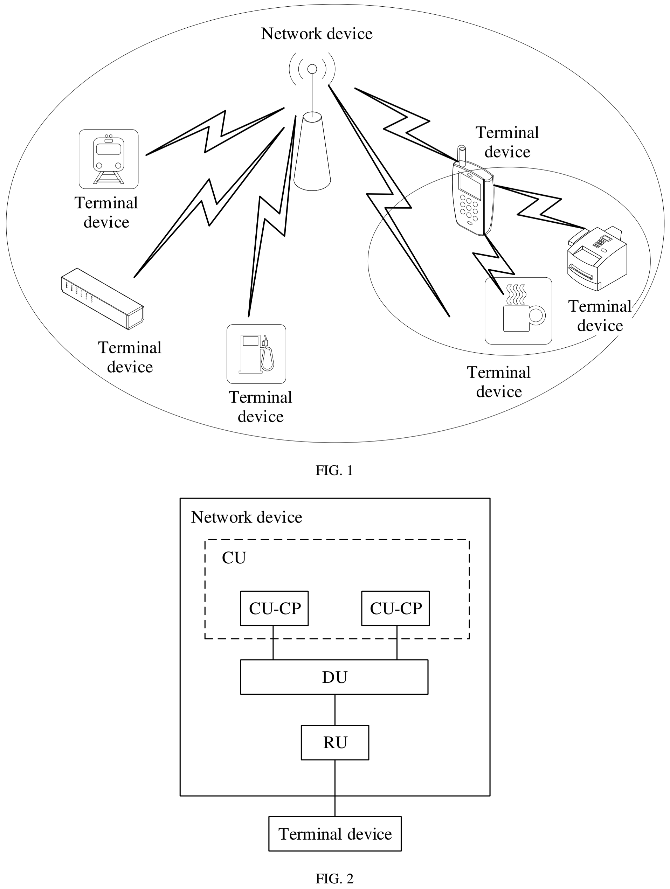

FIG. 1 shows an example of a communication system to which an embodiment of this application is applicable. The communication system includes at least one network device and at least one terminal device. In FIG. 1, one network device and six terminal devices are used as an example. The six terminal devices may each be a cellular phone, a smartphone, a portable computer, a handheld communication device, a handheld computing device, a satellite radio apparatus, a global positioning system, a PDA, and/or any other suitable device configured to perform communication in a wireless communication system, and all the terminal devices may be connected to the network device. All the six terminal devices can communicate with the network device. Certainly, quantities of terminal devices and network devices in FIG. 1 are merely examples, and may be less or more.

The network device in this application has a wireless transceiver function, and is configured to communicate with a terminal. The network device may be specifically a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, an access network device in an open access network (open RAN, ORAN) system or a module of the access network device, a base station in a future mobile communication system, an access node in a Wi-Fi system, or the like. Alternatively, the network device may be a module or a unit that can implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. For example, the base station in embodiments of this application may include base stations in various forms, for example, a macro base station, a micro base station (also referred to as a small cell), a relay station, an access point, a next generation NodeB (gNodeB, gNB), a transmitting and receiving point (transmitting and receiving point, TRP), a transmitting point (transmitting point, TP), a mobile switching center, and a device that performs wireless access functions in device-to-device (Device-to-Device, D2D) communication, vehicle-to-everything (vehicle-to-everything, V2X) communication, machine-to-machine (machine-to-machine, M2M) communication, or internet of things (Internet of Things) communication. This is not specifically limited in embodiments of this application.

The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to the wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application. In addition, in embodiments of this application, the terminal device may be an apparatus configured to implement a function of the terminal device, or may be an apparatus that can support the terminal device in implementing the function, for example, a chip system. The apparatus may be mounted in the terminal device. For example, the terminal device may alternatively be a vehicle detector or a sensor in a gas station.

Communication between the network device and the terminal device complies with a specified protocol layer structure. The protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

FIG. 2 is a diagram of a radio access network. As shown in FIG. 2, a network device includes one or more CUs, one or more DUs, and one or more radio units (radio units, RUs). For clarity, FIG. 2 shows only one CU, one DU, and one RU. The CU is configured to connect to a core network and the one or more DUs. Optionally, the CU may have some functions of the core network. The CU may include a CU-CP and a CU-UP.

The CU and the DU may be configured based on a protocol layer function of a wireless network implemented by the CU and the DU. For example, the CU is configured to implement functions of a PDCP layer and a protocol layer above the PDCP layer (for example, an RRC layer and/or an SDAP layer), and the DU is configured to implement a function of a protocol layer below the PDCP layer (for example, an RLC layer, a MAC layer, and/or a PHY layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer.

The CU-CP may interact with a network element that is in the core network and that is configured to implement the control plane function. The network element that is in the core network and that is configured to implement the control plane function may be an access and mobility function network element, for example, an AMF (access and mobility management function) in a 5G system. The access and mobility function network element is configured to be responsible for mobility management in a mobile network, for example, location update of a terminal device, registration of the terminal device with a network, and handover of the terminal device.

The CU-UP may interact with a network element that is in the core network and that is configured to implement the user plane function. The network element that is in the core network and that is configured to implement the user plane function, for example, a UPF (User Plane Function) in a 5G system, is responsible for forwarding and receiving data in a terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on latency. Functions whose processing time needs to meet a small latency are set on the DU, and functions whose processing time does not need to meet the latency are set on the CU.

The DU and the RU may work together to implement a function of the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement higher-layer functions of the PHY layer, and the RU is configured to implement lower-layer functions of the PHY layer or implement the lower-layer functions and a radio frequency function. The higher-layer functions of the physical layer may include a part of functions of the physical layer, and the part of functions is closer to the MAC layer. The lower-layer functions of the physical layer may include another part of functions of the physical layer, and the part of functions is closer to an intermediate radio frequency side.

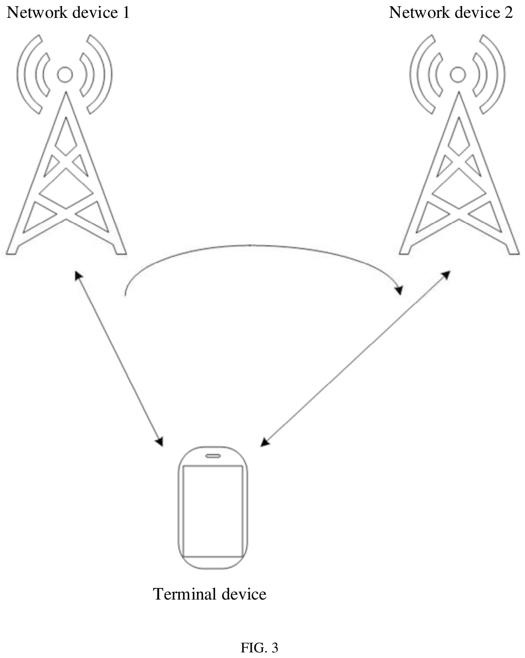

FIG. 3 shows an architecture of a communication network in a communication system according to this application. Any subsequently provided embodiment is applicable to the architecture. A network device 1 is a source network device (or referred to as a working network device or a serving network device) of a terminal device, and a network device 2 is a target network device (or referred to as a standby network device) of the terminal device, namely, a network device that provides a service for the terminal device after handover. "Handover" means handover of a network device that provides a service for the terminal device, and is not limited to "cell handover". "Handover" may be handover caused by a change of a network device that provides a service for the terminal device. For example, in a process in which the terminal device is handed over from a source network device to another network device for communication, a target network device after handover provides a service for the terminal device. It may be understood that the standby network device is a relative concept. For example, for one terminal device, the network device 2 is a standby network device of the network device 1, and for another terminal device, the network device 1 is a standby network device of the network device 2. The network device 1 and the network device 2 may be two different devices. For example, the network device 1 and the network device 2 are two different network devices. Alternatively, the network device 1 and the network device 2 may be two functional modules in a same device. The functional module may be a hardware module, a software module, or a combination of the hardware module and the software module. For example, the network device 1 and the network device 2 are located in a same network device, and are two different functional modules in the network device.

In embodiments of this application, an apparatus configured to implement a function of the network device may be a network device, or may be an apparatus that can support the network device in implementing the function, for example, a chip system or a combined component or part that can implement the function of the network device. The apparatus may be mounted in the network device. In the technical solutions provided in embodiments of this application, the technical solutions provided in embodiments of this application are described by using an example in which the apparatus configured to implement the function of the network device is the network device.

To better understand embodiments of this application, the following first describes related concepts in embodiments of this application.

### 1. Beamforming

Beamforming is also known as beamforming, and is a signal processing technology used in sensor arrays for directional signal transmission or reception. The beamforming technology is achieved by adjusting a parameter of a basic unit of a phase array in such a way that signals at particular angles experience constructive interference while others experience destructive interference. Beamforming can be applied to both a signal transmit end and a signal receive end. The beamforming technology is applied to an NR system. Each type of channel and signal forms narrow beams with more concentrated energy and stronger directivity.

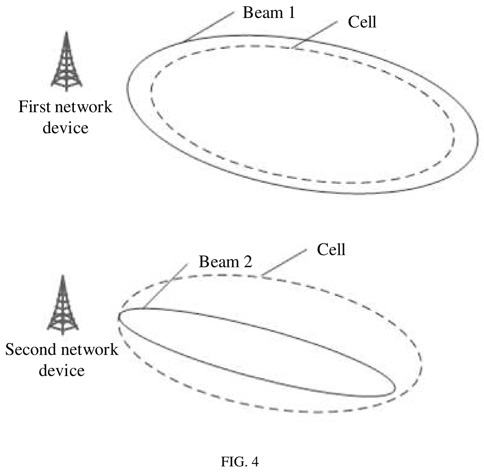

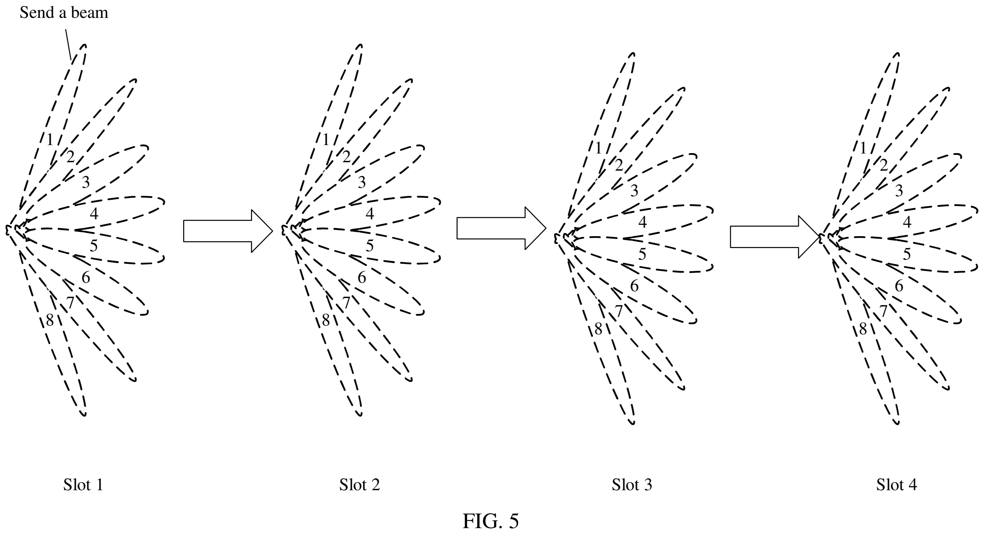

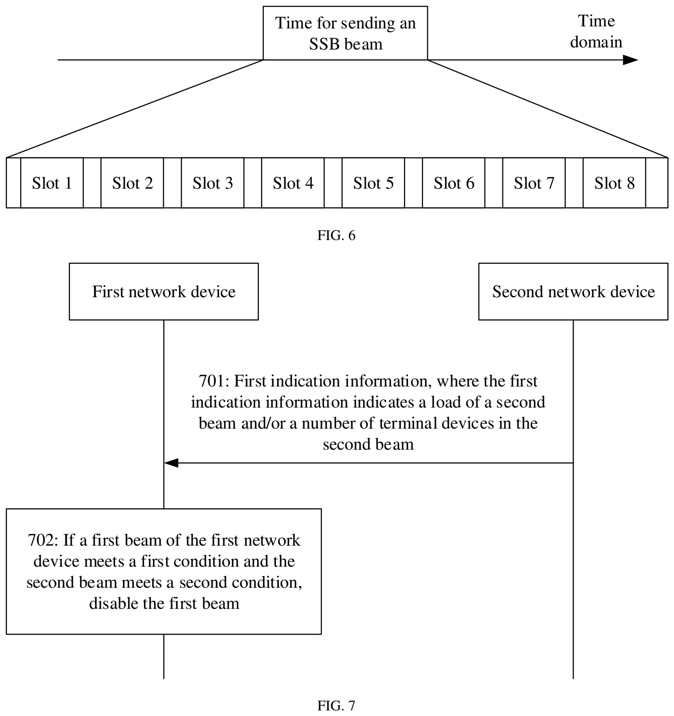

A narrow beam has limited coverage compared with a wide beam (for example, an LTE beam). For example, as shown in FIG. 4, a beam 1 is a beam of a first network device, a beam 2 is a beam of a second network device, and a coverage of the beam 1 is larger than that of the beam 2. It can be learned that the beam 1 can cover an entire cell, but the beam 2 cannot cover the entire cell. When one beam cannot completely cover one cell, it cannot be ensured that each terminal device in the cell can obtain maximum signal energy. Therefore, a plurality of narrow beams need to work together to achieve a specific coverage. In the NR system, cell synchronization and broadcast channels share a synchronization signal and PBCH block (synchronization signal and PBCH block, SSB) beam, namely, a broadcast beam. The SSB beam is a cell-level beam. A network device periodically transmits the SSB beam based on an SSB period, to broadcast a synchronization message and a system message. When using a plurality of SSB beams, the network device usually transmits beams in one direction at each moment, and transmits SSB beams in different directions at different moments, to cover the entire cell. As shown in FIG. 5, the network device includes eight beams, and directions of the eight beams are different. However, a total coverage of the eight beams may completely cover the cell. A beam 1 is transmitted in a slot 1, a beam 2 is transmitted in a slot 2, a beam 3 is transmitted in a slot 3, and a beam 4 is transmitted in a slot 4. FIG. 5 shows only slots in which four beams are transmitted. Distribution of transmission slots of the eight beams of the network device in time domain is shown in FIG. 6. A slot i is used to transmit a beam i (i is an integer less than or equal to 8 and greater than or equal to 1). The network device transmits beams in different directions at different moments, to ensure that each terminal device in the cell can receive a signal sent by the network device by using an SSB beam.

With continuous development of times, multi-frequency beam coverage is applied to many scenarios. The multi-frequency beam coverage scenario means that an area is covered by beams corresponding to at least two frequency bands. Generally, the multi-frequency coverage scenario includes a coverage-layer beam and a capacity-layer beam. Generally, a frequency band corresponding to the coverage-layer beam is less than a frequency band corresponding to the capacity-layer beam. The coverage-layer beam is mainly used to implement continuous coverage in an entire cell area without signal blind spots. Therefore, the coverage-layer beam can usually cover an entire cell. A terminal device that moves at a high speed or uses a broadcast service usually preferentially uses a coverage-layer beam. The capacity-layer beam is mainly used to provide a better service for a terminal device. Therefore, generally, a coverage corresponding to the capacity-layer beam is less than or equal to a coverage corresponding to the coverage-layer beam.

The network device periodically transmits the SSB beam, to broadcast the synchronization message and the system message. However, when the network device continuously transmits a capacity-layer beam in a no-load or low-load scenario, energy consumption of the network device increases. The no-load or low-load scenario is a scenario in which a number of terminal devices connected to the network device is small or a network load is low. Therefore, how to reduce energy consumption of the network device is an urgent problem to be resolved.

To reduce energy consumption of the network device, an embodiment of this application provides a beam disabling method. Refer to FIG. 7. The method shown in FIG. 7 may be performed by a first network device and a second network device. Alternatively, the method shown in FIG. 7 may be performed by a chip in the first network device and a chip in the second network device. FIG. 7 is described by using the first network device and the second network device as an example. The first network device and the second network device in the embodiment in FIG. 7 may be the network device shown in FIG. 1. Alternatively, the first network device and the second network device in the embodiment in FIG. 7 may be respectively the network device 1 and the network device 2 shown in FIG. 3. The method includes but is not limited to the following steps.

701: The second network device sends first indication information to the first network device, and correspondingly, the first network device receives the first indication information from the second network device, where the first indication information indicates a load of a second beam and/or a number of terminal devices in the second beam.

In this embodiment of this application, the second network device exchanges the load of the second beam and/or the number of terminal devices in the second beam with the first network device by using the first indication information, where the second beam is one or more beams of the second network device. Optionally, the first network device may alternatively exchange a load of a first beam and/or a number of terminal devices in the first beam with the second network device by using indication information, where the first beam is one or more beams of the first network device. The first network device and the second network device can periodically exchange a load of a beam and/or a number of terminal devices in the beam, or send indication information to each other only when a specific condition is met, to indicate the load of the beam and/or the number of terminal devices in the beam. An occasion for the first network device and the second network device to exchange the load of the beam and/or the number of terminal devices in the beam is not limited in embodiments of this application. The load of the second beam and the number of terminal devices in the second beam that are indicated by the first indication information help the first network device learn of a load status of the second beam.

In a possible implementation, a message type of the first indication information may be a user-defined message. For example, the message type of the first indication information is an inter-rat energy information report (inter-rat energy info report) message type. The message includes information element (Information Element, IE) corresponding to physical resource block usage (physical resource block usage, PRB Usage) and/or a user equipment number (UE Number). A format of an IE corresponding to the PRB usage includes a downlink (downlink, DL) PRB usage field, an uplink (uplink, UL) PRB usage field, and a reserved field. The DL PRB usage is a ratio of a number of downlink scheduled PRBs to a total number of downlink PRBs, and the UL PRB usage is a ratio of a number of uplink scheduled PRBs to a total number of uplink PRBs. A format of an IE corresponding to the UE Number includes a UE Number field and a reserved field.

702: If the first beam of the first network device meets a first condition and the second beam meets a second condition, the first network device disables the first beam.

In this embodiment of this application, the first beam and the second beam are not in a same frequency band, and a coverage of the first beam is less than or equal to a coverage of the second beam. The coverage of the second beam includes the coverage of the first beam. Therefore, when the first network device disables the first beam, an area in which a terminal device in the first beam is located is still covered by the second beam. In this case, the terminal device can be handed over from the first beam to the second beam before the first beam is disabled, so that communication of the terminal device is not affected. Therefore, according to the method provided in this embodiment of this application, the first beam can be disabled without affecting communication of the terminal device. This helps reduce energy consumption of the first network device. Optionally, the first beam may be the described capacity-layer beam, and the second beam may be the described coverage-layer beam.

Optionally, the first condition is one or more of the following conditions: 1. The load of the first beam is less than a first threshold. 2. The number of terminal devices in the first beam is less than a second threshold. For example, it is assumed that the first condition is the condition 2, and the second threshold is 3. When the number of terminal devices in the first beam is 2, it may be determined that the number of terminal devices is less than the second threshold. Therefore, it is considered that the first beam currently meets the first condition. When the first condition includes a plurality of conditions, that the second beam meets the first condition may be understood as that the second beam meets one of the plurality of conditions, or that the second beam meets the first condition may alternatively be understood as that the second beam meets all of the plurality of conditions. This is not limited in embodiments of this application. When the first beam meets the first condition, it indicates that a current load of the first beam is low. If the first network device still continuously transmits a beam when the load of the first beam is low, large energy consumption is caused. Therefore, when the first beam meets the first condition, disabling the first beam helps reduce energy consumption of the first network device.

Optionally, the second condition is one or more of the following conditions: 1. A sum of the load of the first beam and the load of the second beam is less than a third threshold. 2. A sum of the number of terminal devices in the first beam and the number of terminal devices in the second beam is less than a fourth threshold. 3. The load of the second beam is less than a fifth threshold. 4. The number of terminal devices in the second beam is less than a sixth threshold. The sum of the load of the first beam and the load of the second beam is a ratio of a total number of resources scheduled to the first beam and the second beam to a total number of resources in frequency bands corresponding to the first beam and the second beam. For example, it is assumed that the second condition is the condition 1, the third threshold is 70%, a number of PRBs scheduled to the first beam is 10, a number of PRBs scheduled to the second beam is 10, a total number of PRBs corresponding to the first beam is 50, and a total number of PRBs corresponding to the second beam is 50. In this case, it may be obtained through calculation that the sum of the load of the first beam and the load of the second beam is 20%, and is less than 50%. Therefore, it may be considered that the second beam currently meets the second condition. When the second condition includes a plurality of conditions, that the second beam meets the second condition may be understood as that the second beam meets one of the plurality of conditions, or that the second beam meets the second condition may alternatively be understood as that the second beam meets all of the plurality of conditions. This is not limited in embodiments of this application. When the second beam meets the second condition, it indicates that a current load of the second beam is low, and a load caused by handing over the terminal device from the first beam to the second beam after the first beam is disabled can be borne. Therefore, disabling the first beam when the second beam meets the second condition helps avoid impact on communication of the terminal device.

In a possible implementation, before the first network device disables the first beam, the first network device sends cell handover information to the terminal device in the first beam, where the cell handover information indicates to hand over the terminal device to a first cell served by the second network device. A beam corresponding to the first cell is the second beam. After receiving the cell handover information, the terminal device actively initiates cell handover. For a procedure of performing inter-frequency handover by the terminal device, refer to related descriptions in the 3GPP protocol. Details are not described herein again in this embodiment of this application. Based on this implementation, the terminal device initiates cell handover in a timely manner before the first beam is disabled. This helps avoid impact on communication of the terminal device.

Optionally, a specific implementation in which the first network device disables the first beam is as follows: If all terminal devices in the first beam complete cell handover, the first network device disables the first beam. If a terminal device in the first beam fails to complete cell handover, the first network device does not disable the first beam. After receiving the first indication information sent by the second network device again, the first network device re-determines whether to disable the beam and allow the terminal device to initiate cell handover. If the first network device disables the first beam when a terminal device in the first beam does not complete cell handover, communication of the terminal device is affected. A possible reason why the terminal device fails to complete cell handover is that the second network device currently cannot carry more terminal devices. When the terminal device fails to complete cell handover, the first network device does not disable the first beam, but re-determines, based on new indication information, whether the first beam needs to be disabled. After all terminal devices complete cell handover, the first network device disables the first beam. This implementation helps avoid impact on communication of the terminal device.

After a period of time since the first network device disables the first beam, a large number of terminal devices may access the second network device. Consequently, a load of the second network device is high, and communication of the terminal device is affected. Therefore, in this embodiment of this application, it is proposed that the first beam is enabled when a load of the second beam is high and/or a number of terminal devices is large. The following three implementations are specifically included.

Implementation 1: After the first network device disables the first beam, the second network device sends second indication information to the first device, and correspondingly, the first network device receives the second indication information from the second network device. The second indication information indicates the load of the second beam and/or the number of terminal devices in the second beam. If the second beam meets a third condition, the first network device enables the first beam. The third condition is one or more of the following conditions: a condition 1 that a total load of the second beam of the second network device is greater than or equal to a seventh threshold; and a condition 2 that a total number of terminal devices in the second beam of the second network device is greater than or equal to an eighth threshold. The total load of the second beam of the second network device described herein is a sum of loads of all second beams of the second network device. Similarly, the total number of terminal devices in the second beam of the second network device is a sum of quantities of all terminal devices in all second beams of the second network device. The first network device enabling the first beam may mean that the first network device enables some or all of first beams. This is not limited in embodiments of this application. When the second beam meets the third condition, it indicates that a current total load of the second beam is high. In this case, the first network device enables the first beam, and the second network device sends the cell handover information to the terminal device, so that the terminal device is handed over to the first beam. This helps avoid impact on communication of the terminal device.

Implementation 2: After the first network device disables the first beam, the second network device sends second indication information to the first device, and correspondingly, the first network device receives the second indication information from the second network device. The second indication information indicates the load of the second beam and/or the number of terminal devices in the second beam. If the second beam meets a fourth condition, a first beam corresponding to the second beam is enabled, where the first beam corresponding to the second beam is a beam in which the terminal device is located before the terminal device is handed over to the first cell. The fourth condition is one or more of the following conditions: a condition 1 that the load of the second beam is greater than or equal to a ninth threshold; and a condition 2 that the number of terminal devices in the second beam is greater than or equal to a tenth threshold. The first beam corresponding to the second beam is a beam in which the terminal device is located before the terminal device is handed over to the first cell, and the second beam is a beam in which the terminal device is located after the terminal device is handed over to the first cell. Specifically, before the first beam is disabled, the first network device sends the cell handover information, indicating the terminal device to hand over to the first cell. A beam corresponding to the first cell is the second beam, that is, the second beam is a beam corresponding to the first cell after the terminal device is handed over to the first cell. For example, it is assumed that the first network device includes a first beam 1, a first beam 2, and a first beam 3, and the second network device includes a second beam 1, a second beam 2, and a second beam 3. It is assumed that the first beam 1 needs to be disabled. In this case, the first network device hands over a terminal device 1 in the first beam 1 to the first cell served by the second network device, where the beam corresponding to the first cell is the second beam 1. After a period of time, a load of the second beam 1 is high, and the fourth condition is met. In this case, a first beam corresponding to the second beam 1 needs to be enabled. The first beam corresponding to the second beam 1 is a beam in which the terminal device is located before the terminal device is handed over to the first cell, namely, the first beam 1. Therefore, the first network device enables the first beam 1. When the second beam meets the fourth condition, it indicates that a current load of the second beam is high. In this case, the first network device enables the first beam, and the second network device sends the cell handover information to the terminal device, so that the terminal device is handed over to the first beam corresponding to the second beam. This helps avoid impact on communication of the terminal device. In addition, because the beam in which the terminal device is located before cell handover is enabled, this is more targeted, and helps improve user experience for the terminal device.

Implementation 3: After the first network device disables the first beam, when the second network device determines that the second beam meets the third condition or the fourth condition, the second network device may send beam enabling information to the first network device, and correspondingly, the first network device receives the beam enabling information from the second network device, where the beam enabling information indicates to enable the first beam; and then the first network device enables the first beam. It should be further noted that when the second network device determines that the second beam meets the third condition, the beam enabling information indicates to enable the first beam. When the second network device determines that the second beam meets the fourth condition, the beam enabling information indicates the first network device to enable the first beam corresponding to the second beam, and the first beam corresponding to the second beam is a first beam in which the terminal device is located before cell handover. For related descriptions of the third condition and the fourth condition, refer to descriptions in the implementation 1 and the implementation 2. Details are not described herein again. After the second network device sends the beam enabling information, the second network device sends the cell handover information to a terminal device in the second beam, where the cell handover information indicates the terminal device to hand over to a cell in the first beam. Based on this implementation, the second network device may determine whether the first beam needs to be enabled currently, and the first network device does not need to perform determining, which helps reduce a load of the first network device. In addition, the second network device does not need to send second indication information to the first network device, which reduces a network load.

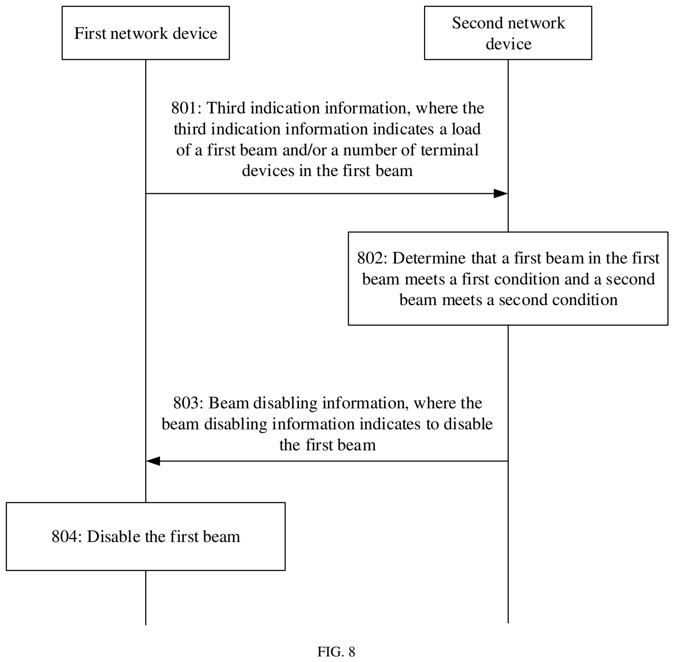

With reference to FIG. 8 in a specific embodiment, the following describes another beam disabling method parallel to the method in the embodiment corresponding to FIG. 7. Terms and concepts in the methods in the embodiments corresponding to FIG. 7 and FIG. 8 may be mutually referenced. The method shown in FIG. 8 may be performed by a first network device and a second network device. Alternatively, the method shown in FIG. 8 may be performed by a chip in the first network device and a chip in the second network device. FIG. 8 is described by using the first network device and the second network device as an example. The first network device and the second network device in the embodiment in FIG. 8 may be the network device shown in FIG. 1. Alternatively, the first network device and the second network device in the embodiment in FIG. 8 may be respectively the network device 1 and the network device 2 shown in FIG. 3. The method includes but is not limited to the following steps.

801: The first network device sends third indication information to the second network device, and correspondingly, the second network device receives the third indication information from the first network device, where the third indication information indicates a load of a first beam and/or a number of terminal devices in the first beam.

In this embodiment of this application, the first network device exchanges the load of the first beam and/or the number of terminal devices in the first beam with the second network device by using the third indication information, where the first beam is one or more beams of the first network device. Optionally, the second network device may alternatively exchange a load of a second beam and/or a number of terminal devices in the second beam with the first network device by using indication information, where the second beam is one or more beams of the second network device. The first network device and the second network device can periodically exchange a load of a beam and/or a number of terminal devices in the beam, or send indication information to each other only when a specific condition is met, to indicate the load of the beam and/or the number of terminal devices in the beam. An occasion for the first network device and the second network device to exchange the load of the beam and/or the number of terminal devices in the beam is not limited in embodiments of this application. The load of the first beam and the number of terminal devices in the first beam that are indicated by the third indication information help the second network device learn of a load status of the first beam.

In a possible implementation, a message type of the third indication information may be a user-defined message. For example, the message type of the third indication information is an inter-rat energy info report message type. The message includes IEs PRB Usage and/or UE Number. A specific format of the third indication information is the same as that of the first indication information. Details are not described in this embodiment of this application.

802: The second network device determines that a first beam in the first beam meets a first condition and the second beam meets a second condition.

803: The second network device sends beam disabling information to the first network device, and correspondingly, the first network device receives the beam disabling information from the second network device, where the beam disabling information indicates to disable the first beam.

In this embodiment of this application, the first beam and the second beam are not in a same frequency band, and a coverage of the first beam is less than or equal to a coverage of the second beam. The coverage of the second beam includes the coverage of the first beam. Therefore, when the first network device disables the first beam, an area in which a terminal device in the first beam is located is still covered by the second beam. In this case, the terminal device can be handed over from the first beam to the second beam before the first beam is disabled, so that communication of the terminal device is not affected. Therefore, according to the method provided in this embodiment of this application, the first beam can be disabled without affecting communication of the terminal device. This helps reduce energy consumption of the first network device. Optionally, the first beam may be the described capacity-layer beam, and the second beam may be the described coverage-layer beam.

Optionally, the first condition is one or more of the following conditions: 1. The load of the first beam is less than a first threshold. 2. The number of terminal devices in the first beam is less than a second threshold. For example, it is assumed that the first condition is the condition 2, and the second threshold is 3. When the number of terminal devices in the first beam is 2 and is less than the second threshold, it may be considered that a current first beam meets the first condition. When the first condition includes a plurality of conditions, that the second beam meets the first condition may be understood as that the second beam meets one of the plurality of conditions, or that the second beam meets the first condition may alternatively be understood as that the second beam meets all of the plurality of conditions. This is not limited in embodiments of this application. When the first beam meets the first condition, it indicates that a current load of the first beam is low. If the first network device still continuously transmits a beam when the load of the first beam is low, large energy consumption is caused. Therefore, when the first beam meets the first condition, the second network device sends the beam disabling information, to indicate the first network device to disable the first beam. This helps reduce energy consumption of the first network device.

Optionally, the second condition is one or more of the following conditions: 1. A sum of the load of the first beam and the load of the second beam is less than a third threshold. 2. A sum of the number of terminal devices in the first beam and the number of terminal devices in the second beam is less than a fourth threshold. 3. The load of the second beam is less than a fifth threshold. 4. The number of terminal devices in the second beam is less than a sixth threshold. The sum of the load of the first beam and the load of the second beam is a ratio of a total number of resources scheduled to the first beam and the second beam to a total number of resources in frequency bands corresponding to the first beam and the second beam. For example, it is assumed that the second condition is the condition 1, the third threshold is 80%, a number of PRBs scheduled to the first beam is 10, a number of PRBs scheduled to the second beam is 10, a total number of PRBs corresponding to the first beam is 50, and a total number of PRBs corresponding to the second beam is 50. In this case, it may be obtained through calculation that the sum of the load of the first beam and the load of the second beam is 20%, and is less than 50%. Therefore, it may be considered that the second beam currently meets the second condition. When the second condition includes a plurality of conditions, that the second beam meets the second condition may be understood as that the second beam meets one of the plurality of conditions, or that the second beam meets the second condition may alternatively be understood as that the second beam meets all of the plurality of conditions. This is not limited in embodiments of this application. When the second beam meets the second condition, it indicates that a current load of the second beam is low, and a load caused by handing over the terminal device from the first beam to the second beam after the first beam is disabled can be borne. Therefore, when the second beam meets the second condition, the second network device sends the beam disabling information, to indicate the first network device to disable the first beam. This helps avoid impact on communication of the terminal device.

804: The first network device disables the first beam.

In a possible implementation, before the first network device disables the first beam, the first network device sends cell handover information to the terminal device in the first beam, where the cell handover information indicates to hand over the terminal device to a first cell served by the second network device. A beam corresponding to the first cell is the second beam. After receiving the cell handover information, the terminal device actively initiates cell handover. For a procedure of performing inter-frequency handover by the terminal device, refer to related descriptions in the 3GPP protocol. Details are not described herein again in this embodiment of this application. Based on this implementation, the terminal device initiates cell handover in a timely manner before the first beam is disabled. This helps avoid impact on communication of the terminal device.

Optionally, a specific implementation in which the first network device disables the first beam is as follows: If all terminal devices in the first beam complete cell handover, the first network device disables the first beam. If a terminal device in the first beam fails to complete cell handover, the first network device does not disable the first beam. After receiving the first indication information sent by the second network device again, the first network device re-determines whether to disable the beam and allow the terminal device to initiate cell handover. If the first network device disables the first beam when a terminal device in the first beam does not complete cell handover, communication of the terminal device is affected. A possible reason why the terminal device fails to complete cell handover is that the second network device currently cannot carry more terminal devices. When the terminal device fails to complete cell handover, the first network device does not disable the first beam, but re-determines, based on new indication information, whether the first beam needs to be disabled. After all terminal devices complete cell handover, the first network device disables the first beam. This implementation helps avoid impact on communication of the terminal device.

After a period of time since the first network device disables the first beam, a large number of terminal devices may access the second network device. Consequently, a load of the second network device is high, and communication of the terminal device is affected. Therefore, in this embodiment of this application, it is proposed that the first beam is enabled when a load of the second beam is high and/or a number of terminal devices is large. The following three implementations are specifically included.

Implementation 1: After the first network device disables the first beam, the second network device sends second indication information to the first device, and correspondingly, the first network device receives the second indication information from the second network device. The second indication information indicates the load of the second beam and/or the number of terminal devices in the second beam. If the second beam meets a third condition, the first network device enables the first beam. The third condition is one or more of the following conditions: a condition 1 that a total load of the second beam of the second network device is greater than or equal to a seventh threshold; and a condition 2 that a total number of terminal devices in the second beam of the second network device is greater than or equal to an eighth threshold. The total load of the second beam of the second network device described herein is a sum of loads of all second beams of the second network device. Similarly, the total number of terminal devices in the second beam of the second network device is a sum of quantities of all terminal devices in all second beams of the second network device. The first network device enabling the first beam may mean that the first network device enables some or all of first beams. This is not limited in embodiments of this application. When the second beam meets the third condition, it indicates that a current total load of the second beam is high. In this case, the first network device enables the first beam, and the second network device sends the cell handover information to the terminal device, so that the terminal device is handed over to the first beam. This helps avoid impact on communication of the terminal device.

Implementation 2: After the first network device disables the first beam, the second network device sends second indication information to the first device, and correspondingly, the first network device receives the second indication information from the second network device. The second indication information indicates the load of the second beam and/or the number of terminal devices in the second beam. If the second beam meets a fourth condition, a first beam corresponding to the second beam is enabled, where the first beam corresponding to the second beam is a beam in which the terminal device is located before the terminal device is handed over to the first cell. The fourth condition is one or more of the following conditions: a condition 1 that the load of the second beam is greater than or equal to a ninth threshold; and a condition 2 that the number of terminal devices in the second beam is greater than or equal to a tenth threshold. The first beam corresponding to the second beam is a beam in which the terminal device is located before the terminal device is handed over to the first cell, and the second beam is a beam in which the terminal device is located after the terminal device is handed over to the first cell. Specifically, before the first beam is disabled, the first network device sends the cell handover information, indicating the terminal device to hand over to the first cell. A beam corresponding to the first cell is the second beam, that is, the second beam is a beam corresponding to the first cell after the terminal device is handed over to the first cell. For example, it is assumed that the first network device includes a first beam 1, a first beam 2, and a first beam 3, and the second network device includes a second beam 1, a second beam 2, and a second beam 3. It is assumed that the first beam 1 needs to be disabled. In this case, the first network device hands over a terminal device 1 in the first beam 1 to the first cell served by the second network device, where the beam corresponding to the first cell is the second beam 1. After a period of time, a load of the second beam 1 is high, and the fourth condition is met. In this case, a first beam corresponding to the second beam 1 needs to be enabled. The first beam corresponding to the second beam 1 is a beam in which the terminal device is located before the terminal device is handed over to the first cell, namely, the first beam 1. Therefore, the first network device enables the first beam 1. When the second beam meets the fourth condition, it indicates that a current load of the second beam is high. In this case, the first network device enables the first beam, and the second network device sends the cell handover information to the terminal device, so that the terminal device is handed over to the first beam corresponding to the second beam. This helps avoid impact on communication of the terminal device. In addition, because the beam in which the terminal device is located before cell handover is enabled, this is more targeted, and helps improve user experience for the terminal device.

Implementation 3: After the first network device disables the first beam, when the second network device determines that the second beam meets the third condition or the fourth condition, the second network device may send beam enabling information to the first network device, and correspondingly, the first network device receives the beam enabling information from the second network device, where the beam enabling information indicates to enable the first beam; and then the first network device enables the first beam. It should be further noted that when the second network device determines that the second beam meets the third condition, the beam enabling information indicates to enable the first beam. When the second network device determines that the second beam meets the fourth condition, the beam enabling information indicates the first network device to enable the first beam corresponding to the second beam, and the first beam corresponding to the second beam is a first beam in which the terminal device is located before cell handover. For related descriptions of the third condition and the fourth condition, refer to descriptions in the implementation 1 and the implementation 2. Details are not described herein again. After the second network device sends the beam enabling information, the second network device sends the cell handover information to a terminal device in the second beam, where the cell handover information indicates the terminal device to hand over to a cell in the first beam. Based on this implementation, the second network device may determine whether the first beam needs to be enabled currently, and the first network device does not need to perform determining, which helps reduce a load of the first network device. In addition, the second network device does not need to send second indication information to the first network device, which reduces a network load.

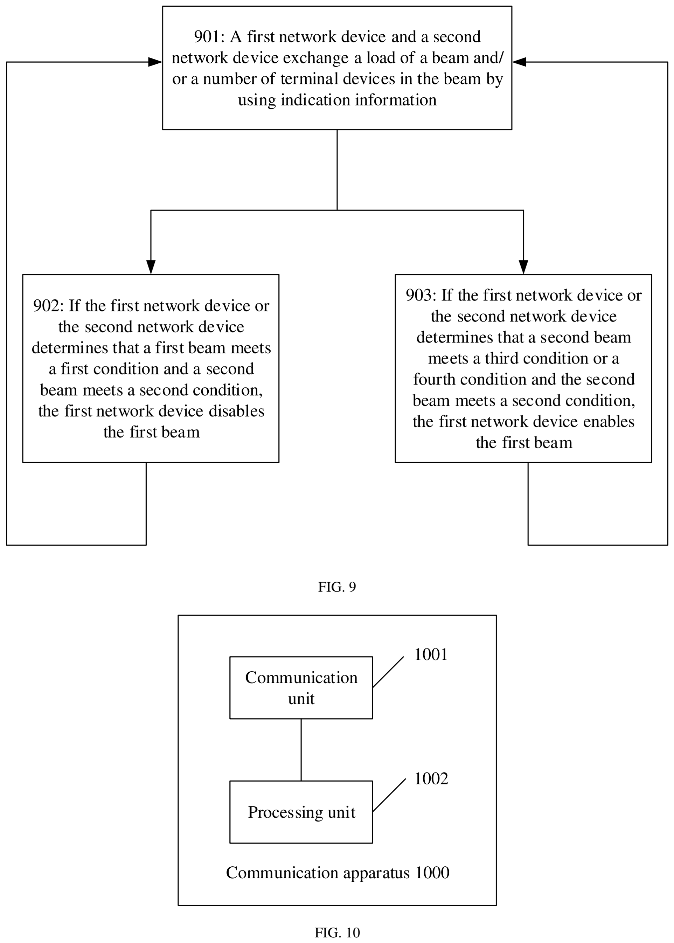

With reference to FIG. 9, the following provides overall descriptions of the methods described in the two embodiments corresponding to FIG. 7 and FIG. 8 provided in embodiments of this application.

901: A first network device and a second network device exchange a load of a beam and/or a number of terminal devices in the beam by using indication information.

The first network device and the second network device may learn of, through information exchange, a load of a first beam, a load of a second beam, a number of terminal devices in the first beam, and a number of terminal devices in the second beam. The first beam is one or more beams of the first network device, and the second beam is one or more beams of the second network device. The first network device and the second network device can periodically exchange a load of a beam and/or a number of terminal devices in the beam, or send indication information to each other only when a specific condition is met, to indicate the load of the beam and/or the number of terminal devices in the beam. An occasion for the first network device and the second network device to exchange the load of the beam and/or the number of terminal devices in the beam is not limited in embodiments of this application.

902: If the first network device or the second network device determines that the first beam meets a first condition and the second beam meets a second condition, the first network device disables the first beam.

The first condition is one or more of the following conditions: 1. The load of the first beam is less than a first threshold. 2. A number of terminal devices in the first beam is less than a second threshold. The second condition is one or more of the following conditions: 1. A sum of the load of the first beam and the load of the second beam is less than a third threshold. 2. A sum of the number of terminal devices in the first beam and a number of terminal devices in the second beam is less than a fourth threshold. 3. The load of the second beam is less than a fifth threshold. 4. The number of terminal devices in the second beam is less than a sixth threshold.

When the first beam meets the first condition, it indicates that a current load of the first beam is low. If the first network device still continuously transmits a beam when the load of the first beam is low, large energy consumption is caused. When the second beam meets the second condition, it indicates that a current load of the second beam is low, and a load caused by handing over a terminal device from the first beam to the second beam after the first beam is disabled can be borne. The first beam is disabled, so that energy consumption of the first network device can be reduced while communication of the terminal device is not affected.

If the second network device performs determining, when the first beam meets the first condition and the second beam meets the second condition, the second network device sends beam disabling information to the first network device, to indicate the first network device to disable the first beam.

Before the first network device disables the first beam, the first network device sends cell handover information to the terminal device in the first beam, where the cell handover information indicates to hand over the terminal device to a first cell served by the second network device. When all terminal devices in the first beam complete cell handover, the first network device disables the first beam. This implementation helps avoid impact on communication of the terminal device.

903: If the first network device or the second network device determines that the second beam meets the third condition or the fourth condition and the second beam meets the second condition, the first network device enables the first beam.

The third condition is one or more of the following conditions: a condition 1 that a total load of the second beam of the second network device is greater than or equal to a seventh threshold; and a condition 2 that a total number of terminal devices in the second beam of the second network device is greater than or equal to an eighth threshold. The fourth condition is one or more of the following conditions: a condition 1 that the load of the second beam is greater than or equal to a ninth threshold; and a condition 2 that the number of terminal devices in the second beam is greater than or equal to a tenth threshold. When the second beam meets the third condition, the first network device may enable all or some of first beams. When the second beam meets the fourth condition, the first network device enables a first beam corresponding to the second beam, where the first beam corresponding to the second beam is a beam in which the terminal device is located before the terminal device is handed over to the first cell.

If the second network device performs determining, when the second beam meets the third condition or the fourth condition, the second network device sends the beam enabling information to the first network device, to indicate the first network device to enable the first beam.

Based on the method described above, it can be learned that an execution body for determining a beam disabling condition (for example, the first condition and the second condition) and an execution body for determining a beam enabling condition (for example, the third condition and the fourth condition) are not limited in embodiments of this application. If it is determined that the beam disabling condition or the beam enabling condition is executed by a device corresponding to the beam, the beam may be directly disabled or beam enabled. If it is determined that the beam disabling condition or the beam enabling condition is not executed by a device corresponding to the beam, the beam disabling information or the beam enabling information needs to be used to indicate the device corresponding to the beam to disable and enable the beam.

In conclusion, when a load is low, the first network device disables the first beam, and hands over the terminal device in the first beam to the second network device before disabling the first beam. In addition, when a load of the second network device is high, the first network device enables the first beam to share a load of the second network device. Based on the foregoing flexible beam management, energy consumption of the first network device can be reduced while communication of the terminal device is not affected.

To implement functions in the method provided in the foregoing embodiment of this application, the first network device and the second network device each may include a hardware structure and/or a software module, to implement the foregoing functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

A communication apparatus shown in FIG. 10 may be a first network device or a second network device, or an apparatus that can be used in combination with the first network device or the second network device. In a possible implementation, the communication apparatus may include modules or units that are in a one-to-one correspondence with the methods/operations/steps/actions performed by the first network device or the second network device in the foregoing method embodiments. The unit may be implemented by a hardware circuit, software, or a combination of the hardware circuit and the software. Alternatively, the communication apparatus may be a chip system, and is configured to perform some or all functions of the first network device or the second network device in the method embodiment described in FIG. 7 or FIG. 8.

FIG. 10 is a diagram of a structure of a communication apparatus according to an embodiment of this application. The communication apparatus shown in FIG. 10 may include a communication unit 1001 and a processing unit 1002. The processing unit 1002 is configured to perform data processing. A receiving unit and a sending unit are integrated into the communication unit 1001. The communication unit 1001 may also be referred to as a transceiver unit. Alternatively, the communication unit 1001 may be split into a receiving unit and a sending unit.

In an embodiment,
when the communication apparatus 1000 is configured to implement a function of a first network device in the method embodiment shown in FIG. 7, the communication unit 1001 is configured to receive first indication information from a second network device, where the first indication information indicates a load of a second beam and/or a number of terminal devices in the second beam, and the second beam is one or more beams of the second network device; and the processing unit 1002 is configured to: if a first beam of the first network device meets a first condition and the second beam meets a second condition, disable the first beam, where the first beam and the second beam are not in a same frequency band, and a coverage of the first beam is less than or equal to a coverage of the second beam. Optionally, the first condition is one or more of the following conditions: A load of the first beam is less than a first threshold; and a number of terminal devices in the first beam is less than a second threshold. The second condition is one or more of the following conditions: A sum of the load of the first beam and the load of the second beam is less than a third threshold; a sum of the number of terminal devices in the first beam and the number of terminal devices in the second beam is less than a fourth threshold; the load of the second beam is less than a fifth threshold; and the number of terminal devices in the second beam is less than a sixth threshold.

In a possible implementation, the communication unit 1001 is further configured to send cell handover information to a terminal device in the first beam, where the cell handover information indicates to hand over the terminal device to a first cell served by the second network device.

In a possible implementation, when disabling the first beam, the processing unit 1002 is specifically configured to disable the first beam if all terminal devices in the first beam complete cell handover.

In a possible implementation, the communication unit 1001 is further configured to receive second indication information from the second network device, where the second indication information indicates the load of the second beam and/or the number of terminal devices in the second beam; and the processing unit 1002 is further configured to enable the first beam if the second beam meets a third condition, where the third condition is one or more of the following conditions: A total load of the second beam of the second network device is greater than or equal to a seventh threshold; and a total number of terminal devices in the second beam of the second network device is greater than or equal to an eighth threshold.

In a possible implementation, the communication unit 1001 is further configured to receive second indication information from the second network device, where the second indication information indicates the load of the second beam and/or the number of terminal devices in the second beam; and the processing unit 1002 is further configured to: if the second beam meets a fourth condition, enable a first beam corresponding to the second beam, where the first beam corresponding to the second beam is a beam in which the terminal device is located before the terminal device is handed over to the first cell, and the fourth condition is one or more of the following conditions: The load of the second beam is greater than or equal to a ninth threshold; and the number of terminal devices in the second beam is greater than or equal to a tenth threshold.

In a possible implementation, the communication unit 1001 is further configured to receive beam enabling information from the second network device, where the beam enabling information indicates to enable the first beam; and the processing unit 1002 is further configured to enable the first beam.

For more detailed descriptions of the communication unit 1001 and the processing unit 1002, refer to corresponding related descriptions in the method embodiment shown in FIG. 6.

In another embodiment,
when the communication apparatus 1000 is configured to implement a function of a first network device in the method embodiment shown in FIG. 8, the communication unit 1001 is configured to send third indication information to a second network device, where the third indication information indicates a load of a first beam and/or a number of terminal devices in the first beam, and the first beam is a beam of the first network device; and the communication unit 1001 is further configured to receive beam disabling information from the second network device, where the beam disabling information indicates to disable the first beam; and the processing unit 1002 is configured to disable the first beam.

In a possible implementation, the communication unit 1001 is further configured to send cell handover information to a terminal device in the first beam, where the cell handover information indicates to hand over the terminal device to a first cell served by the second network device.

In a possible implementation, when disabling the first beam, the processing unit 1002 is specifically configured to disable the first beam if all terminal devices in the first beam complete cell handover.

In a possible implementation, the communication unit 1001 is further configured to receive second indication information from the second network device, where the second indication information indicates a load of a second beam of the second network device and/or a number of terminal devices in the second beam, the first beam and the second beam are not in a same frequency band, and a coverage of the first beam is less than or equal to a coverage of the second beam; and the processing unit 1002 is further configured to enable the first beam if the second beam meets a third condition, where the third condition is one or more of the following conditions: A total load of the second beam of the second network device is greater than or equal to a seventh threshold; and a total number of terminal devices in the second beam of the second network device is greater than or equal to an eighth threshold.

In a possible implementation, the communication unit 1001 is further configured to receive second indication information from the second network device, where the second indication information indicates a load of a second beam of the second network device and/or a number of terminal devices in the second beam, the first beam and the second beam are not in a same frequency band, and a coverage of the first beam is less than a coverage of the second beam; and the processing unit 1002 is further configured to: if the second beam meets a fourth condition, enable a first beam corresponding to the second beam, where the first beam corresponding to the second beam is a beam in which the terminal device is located before the terminal device is handed over to the first cell, and the fourth condition is one or more of the following conditions: The load of the second beam is greater than or equal to a ninth threshold; and the number of terminal devices in the second beam is greater than or equal to a tenth threshold.

In a possible implementation, the communication unit 1001 is further configured to receive beam enabling information from the second network device, where the beam enabling information indicates to enable the first beam; and the processing unit 1002 is further configured to enable the first beam.

When the communication apparatus 1000 is configured to implement a function of a second network device in the method embodiment shown in FIG. 8, the communication unit 1001 is configured to receive third indication information from a first network device, where the third indication information indicates a load of a first beam of the first network device and/or a number of terminal devices in the first beam; and if a first beam in the first beam meets a first condition and a second beam of the second network device meets a second condition, send beam disabling information to the first network device, where the beam disabling information indicates the first network device to disable the first beam, the first beam and the second beam are not in a same frequency band, and a coverage of the first beam is less than or equal to a coverage of the second beam. Optionally, the first condition is one or more of the following conditions: The load of the first beam is less than a first threshold; and the number of terminal devices in the first beam is less than a second threshold. The second condition is one or more of the following conditions: A sum of the load of the first beam and a load of the second beam is less than a third threshold; a sum of the number of terminal devices in the first beam and a number of terminal devices in the second beam is less than a fourth threshold; the load of the second beam is less than a fifth threshold; and the number of terminal devices in the second beam is less than a sixth threshold.

In a possible implementation, the communication unit 1001 is further configured to: if the second beam meets a third condition, send beam enabling information to the first network device, where the beam enabling information indicates to enable the first beam, and the third condition is one or more of the following conditions: A total load of the second beam of the second network device is greater than or equal to a seventh threshold; and a total number of terminal devices in the second beam of the second network device is greater than or equal to an eighth threshold.

In a possible implementation, the communication unit 1001 is further configured to: if the second beam meets a fourth condition, send beam enabling information to the first network device, where the beam enabling information indicates the first network device to enable a first beam corresponding to the second beam, and the first beam corresponding to the second beam is a beam in which a terminal device is located before cell handover; and send cell handover information to a terminal device in the second beam, where the cell handover information indicates to hand over the terminal device to a cell in the first beam corresponding to the second beam.

In a possible implementation, after the communication unit 1001 is further configured to send beam disabling information to the first network device, the method further includes: sending second indication information to the first network device, where the second indication information indicates the load of the second beam and/or the number of terminal devices in the second beam.

For more detailed descriptions of the communication unit 1001 and the processing unit 1002, refer to corresponding related descriptions in the method embodiment shown in FIG. 7.

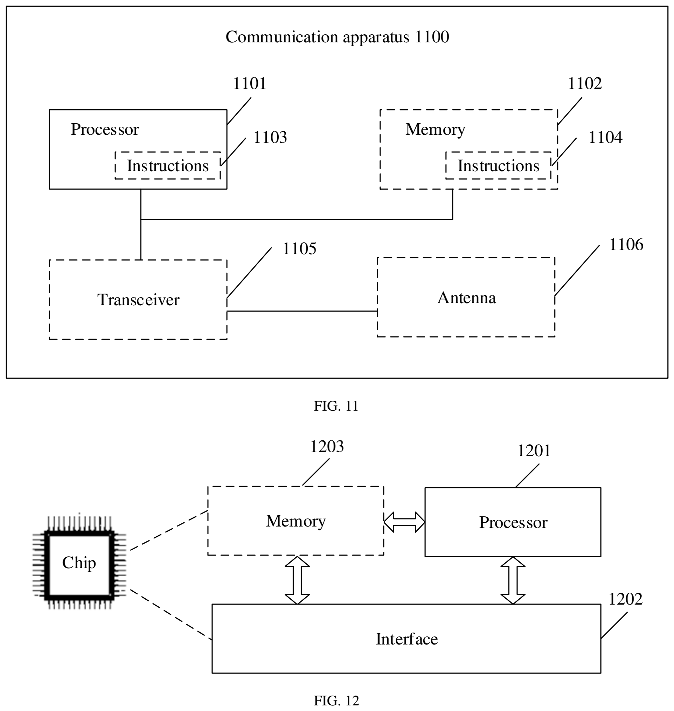

FIG. 11 is a diagram of a structure of another communication apparatus. The communication apparatus 1100 may be the first network device in the foregoing method embodiment, or may be a chip, a chip system, a processor, or the like that supports the first network device in implementing the foregoing method. The communication apparatus may be configured to implement the method described in the foregoing method embodiment. For details, refer to descriptions in the foregoing method embodiment.

Alternatively, the communication apparatus 1100 may be the second network device in the foregoing method embodiment, or may be a chip, a chip system, a processor, or the like that supports the second network device in implementing the foregoing method. The communication apparatus may be configured to implement the method described in the foregoing method embodiment. For details, refer to descriptions in the foregoing method embodiment.

The communication apparatus 1100 may include one or more processors 1101. The processor 1101 may be a general-purpose processor, a dedicated processor, or the like. For example, the processor 1101 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1100 may include one or more memories 1102. The memory may store instructions 1104, and the instructions may be run on the processor 1101, to enable the communication apparatus 1100 to perform the method described in the foregoing method embodiment. Optionally, the memory 1102 may further store data. The processor 1101 and the memory 1102 may be disposed separately, or may be integrated together.

Optionally, the communication apparatus 1100 may further include a transceiver 1105 and an antenna 1106. The transceiver 1105 may be referred to as a transceiver unit, a transceiver machine, a transceiver circuit, or the like, and is configured to implement a transceiver function. The transceiver 1105 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1100 is a first network device, and the processor 1101 is configured to perform a data processing operation of the first network device in the foregoing method embodiment. The transceiver 1105 is configured to perform data sending and receiving operations of the first network device in the foregoing method embodiment.

Alternatively, the communication apparatus 1100 is a second network device, and the processor 1101 is configured to perform a data processing operation of the second network device in the foregoing method embodiment. The transceiver 1105 is configured to perform data sending and receiving operations of the second network device in the foregoing method embodiment.

In another possible design, the processor 1101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to: read and write code/data. Alternatively, the transceiver circuit, the interface, or the interface circuit may be configured to transmit or transfer a signal.

In another possible design, optionally, the processor 1101 may store instructions 1103. The instructions 1103 are run on the processor 1101, to enable the communication apparatus 1100 to perform the method described in the foregoing method embodiment. The instructions 1103 may be fixed in the processor 1101. In this case, the processor 1101 may be implemented by hardware.

In still another possible design, the communication apparatus 1100 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (Radio Frequency Integrated Circuit, RFIC), a mixed-signal IC, an application-specific integrated circuit (application-specific integrated circuit, ASIC), a printed circuit board (printed circuit board, PCB), an electronic device, or the like.

The communication apparatus described in the foregoing embodiment may be the first network device or the second network device. However, a scope of the communication apparatus described in embodiments of this application is not limited thereto, and a structure of the communication apparatus may not be limited by FIG. 11. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (Mobile Station Modem, MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown as FIG. 12. The chip shown in FIG. 12 includes a processor 1201 and an interface 1202. Optionally, the chip may further include a memory 1203. There may be one or more processors 1201, and there may be a plurality of interfaces 1202.

In a design, the chip is configured to implement a function of the first network device in this embodiment of this application.

The interface 1202 is configured to input or output a signal.

The processor 1201 is configured to perform a data processing operation of the first network device in the foregoing method embodiment.

In another design, the chip is configured to implement a function of the second network device in this embodiment of this application.

The interface 1202 is configured to input or output a signal.

The processor 1201 is configured to perform a data processing operation of the second network device in the foregoing method embodiment.

It may be understood that, in some scenarios, some optional features in embodiments of this application may be independently implemented without depending on another feature, for example, a solution on which the optional features currently are based, to resolve a corresponding technical problem and achieve corresponding effect. Alternatively, in some scenarios, the optional features may be combined with another feature based on a requirement. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing embodiments, description of each embodiment has its own emphasis. For a part that is not described in detail in an embodiment, reference may be made to related descriptions in other embodiments.

Finally, it should be noted that the foregoing embodiments are merely used to describe the technical solutions of this application, but not to limit the technical solutions. Although this application is described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A beam disabling method, applied to a first network device, wherein the method comprises:
receiving first indication information from a second network device, wherein the first indication information indicates a load of a second beam and/or a number of terminal devices in the second beam, and the second beam is one or more beams of the second network device; and
if a first beam of the first network device meets a first condition and the second beam meets a second condition, disabling the first beam, wherein the first beam and the second beam are not in a same frequency band, and a coverage of the first beam is less than or equal to a coverage of the second beam.

2. The method according to claim 1, wherein the first condition is one or more of the following conditions: a load of the first beam is less than a first threshold; and a number of terminal devices in the first beam is less than a second threshold.

3. The method according to claim 1 or 2, wherein the second condition is one or more of the following conditions: a sum of the load of the first beam and the load of the second beam is less than a third threshold; a sum of the number of terminal devices in the first beam and the number of terminal devices in the second beam is less than a fourth threshold; the load of the second beam is less than a fifth threshold; and the number of terminal devices in the second beam is less than a sixth threshold.

4. The method according to any one of claims 1 to 3, wherein before disabling the first beam, the method further comprises:
sending cell handover information to a terminal device in the first beam, wherein the cell handover information indicates to hand over the terminal device to a first cell served by the second network device.

5. The method according to claim 4, wherein disabling the first beam comprises:
if all terminal devices in the first beam complete cell handover, disabling the first beam.

6. The method according to any one of claims 1 to 5, wherein after disabling the first beam, the method further comprises:
receiving second indication information from the second network device, wherein the second indication information indicates the load of the second beam and/or the number of terminal devices in the second beam; and
if the second beam meets a third condition, enabling the first beam, wherein
the third condition is one or more of the following conditions:
a total load of the second beam of the second network device is greater than or equal to a seventh threshold; and
a total number of terminal devices in the second beam of the second network device is greater than or equal to an eighth threshold.

7. The method according to claim 4 or 5, wherein after disabling the first beam, the method further comprises:
receiving second indication information from the second network device, wherein the second indication information indicates the load of the second beam and/or the number of terminal devices in the second beam; and
if the second beam meets a fourth condition, enabling a first beam corresponding to the second beam, wherein the first beam corresponding to the second beam is a beam in which the terminal device is located before the terminal device is handed over to the first cell, wherein
the fourth condition is one or more of the following conditions:
the load of the second beam is greater than or equal to a ninth threshold; and
the number of terminal devices in the second beam is greater than or equal to a tenth threshold.

8. The method according to any one of claims 1 to 5, wherein the method further comprises:
receiving beam enabling information from the second network device, wherein the beam enabling information indicates to enable the first beam; and
enabling the first beam.

9. A beam disabling method, applied to a first network device, wherein the method comprises:
sending third indication information to a second network device, wherein the third indication information indicates a load of a first beam and/or a number of terminal devices in the first beam, and the first beam is a beam of the first network device;
receiving beam disabling information from the second network device, wherein the beam disabling information indicates to disable the first beam; and
disabling the first beam.

10. The method according to claim 9, wherein before disabling the first beam, the method further comprises:
sending cell handover information to a terminal device in the first beam, wherein the cell handover information indicates to hand over the terminal device to a first cell served by the second network device.

11. The method according to claim 10, wherein disabling the first beam comprises:
if all terminal devices in the first beam complete cell handover, disabling the first beam.

12. The method according to any one of claims 9 to 11, wherein after disabling the first beam, the method further comprises:
receiving second indication information from the second network device, wherein the second indication information indicates a load of a second beam of the second network device and/or a number of terminal devices in the second beam, the first beam and the second beam are not in a same frequency band, and a coverage of the first beam is less than or equal to a coverage of the second beam; and
if the second beam meets a third condition, enabling the first beam, wherein
the third condition is one or more of the following conditions:
a total load of the second beam of the second network device is greater than or equal to a seventh threshold; and
a total number of terminal devices in the second beam of the second network device is greater than or equal to an eighth threshold.

13. The method according to claim 10 or 11, wherein after disabling the first beam, the method further comprises:
receiving second indication information from the second network device, wherein the second indication information indicates a load of a second beam of the second network device and/or a number of terminal devices in the second beam, the first beam and the second beam are not in a same frequency band, and a coverage of the first beam is less than a coverage of the second beam; and
if the second beam meets a fourth condition, enabling a first beam corresponding to the second beam, wherein the first beam corresponding to the second beam is a beam in which the terminal device is located before the terminal device is handed over to the first cell, wherein
the fourth condition is one or more of the following conditions:
the load of the second beam is greater than or equal to a ninth threshold; and
the number of terminal devices in the second beam is greater than or equal to a tenth threshold.

14. The method according to any one of claims 9 to 11, wherein after disabling the first beam, the method further comprises:
receiving beam enabling information from the second network device, wherein the beam enabling information indicates to enable the first beam; and
enabling the first beam.

15. A beam disabling method, applied to a second network device, wherein the method comprises:
receiving third indication information from a first network device, wherein the third indication information indicates a load of a first beam of the first network device and/or a number of terminal devices in the first beam; and
if a first beam in the first beam meets a first condition and a second beam of the second network device meets a second condition, sending beam disabling information to the first network device, wherein the beam disabling information indicates the first network device to disable the first beam, the first beam and the second beam are not in a same frequency band, and a coverage of the first beam is less than or equal to a coverage of the second beam.

16. The method according to claim 15, wherein the first condition is one or more of the following conditions: the load of the first beam is less than a first threshold; and the number of terminal devices in the first beam is less than a second threshold.

17. The method according to claim 15 or 16, wherein the second condition is one or more of the following conditions: a sum of the load of the first beam and a load of the second beam is less than a third threshold; a sum of the number of terminal devices in the first beam and a number of terminal devices in the second beam is less than a fourth threshold; the load of the second beam is less than a fifth threshold; and the number of terminal devices in the second beam is less than a sixth threshold.

18. The method according to any one of claims 15 to 17, wherein after sending the beam disabling information to the first network device, the method further comprises:
if the second beam meets a third condition, sending beam enabling information to the first network device, wherein the beam enabling information indicates to enable the first beam, wherein
the third condition is one or more of the following conditions:
a total load of the second beam of the second network device is greater than or equal to a seventh threshold; and
a total number of terminal devices in the second beam of the second network device is greater than or equal to an eighth threshold.

19. The method according to any one of claims 15 to 17, wherein after sending the beam disabling information to the first network device, the method further comprises:
if the second beam meets a fourth condition, sending beam enabling information to the first network device, wherein the beam enabling information indicates the first network device to enable a first beam corresponding to the second beam, and the first beam corresponding to the second beam is a beam in which a terminal device is located before cell handover; and
sending cell handover information to a terminal device in the second beam, wherein the cell handover information indicates to hand over the terminal device to a cell in the first beam corresponding to the second beam.

20. The method according to any one of claims 15 to 19, wherein after sending the beam disabling information to the first network device, the method further comprises:
sending second indication information to the first network device, wherein the second indication information indicates the load of the second beam and/or the number of terminal devices in the second beam.

21. A communication apparatus, wherein the communication apparatus comprises a module or a unit configured to perform the method according to any one of claims 1 to 6, or the communication apparatus comprises a module or a unit configured to perform the method according to any one of claims 7 to 12, or the communication apparatus comprises a module or a unit configured to perform the method according to any one of claims 13 to 16.

22. A communication apparatus, comprising a processor coupled to a memory, wherein the processor is configured to execute a computer program or instructions stored in the memory, to implement the method according to any one of claims 1 to 8, or the method according to any one of claims 9 to 14, or the method according to any one of claims 15 to 20.

23. The communication apparatus according to claim 22, wherein the communication apparatus further comprises the memory and/or a transceiver, and the transceiver is configured to: send and receive data and/or signaling.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 8 by using a logic circuit or executing instructions, or the processor is configured to implement the method according to any one of claims 9 to 14 by using a logic circuit or executing instructions, or the processor is configured to implement the method according to any one of claims 15 to 20 by using a logic circuit or by executing instructions.

25. A computer-readable storage medium, wherein the computer-readable storage medium stores a computer program or instructions, and when the computer program or the instructions are executed by a communication apparatus, the method according to any one of claims 1 to 8 is performed, or the method according to any one of claims 9 to 14 is performed, or the method according to any one of claims 15 to 20 is performed.

26. A computer program product, comprising instructions, wherein when the computer program product runs on a computer, the computer is enabled to perform the method according to any one of claims 1 to 8, or the method according to any one of claims 9 to 14, or the method according to any one of claims 15 to 20.

27. A system, comprising a first network device and a second network device, wherein the first network device is configured to perform the method according to any one of claims 9 to 14, and the second network device is configured to perform the method according to any one of claims 15 to 20.

28. A system, comprising a first network device and a second network device, wherein the first network device is configured to perform the method according to any one of claims 1 to 8, and the second network device is configured to send first indication information to the first network device, wherein the first indication information indicates a load of a second beam and/or a number of terminal devices in the second beam, and the second beam is one or more beams of the second network device.
